# FASCICULE DE BREVET EUROPEEN

(11) **EP 2 678 915 B1**
(45) Date de publication et mention de la délivrance du brevet: **20.05.2020**
(21) Numéro de dépôt: 12707836.8
(22) Date de dépôt: 01.02.2012
(51) Int. Cl.: H02J 1/14, H02J 7/14, B60R 16/03, B60L 58/12

(54) **PROCEDE DE GESTION DE L'ALIMENTATION EN ÉNERGIE ÉLECTRIQUE DES EQUIPEMENTS ÉLECTRIQUES D'UN VÉHICULE AUTOMOBILE**
VERFAHREN ZUR VERWALTUNG DER STROMVERSORGUNG EINER ELEKTRISCHEN VORRICHTUNG IN EINEM KRAFTFAHRZEUG
METHOD FOR MANAGING THE SUPPLY OF ELECTRICAL POWER TO THE ELECTRICAL EQUIPMENT OF A MOTOR VEHICLE

(30) Priorité: 22.02.2011 FR 1151448
(43) Date de publication de la demande: 01.01.2014
(73) Titulaire: PSA Automobiles SA, 78300 Poissy (FR)
(72) Inventeur: BELKHIRI, Abdeslam, F-92110 Clichy (FR); MEHARZI, Derradji, F-91000 Evry (FR)
(74) Mandataire: Jeannin, Laurent Jean-Pierre
(86) Numéro de dépôt international: PCT/FR2012/050214
(87) Numéro de publication internationale: WO 2012/114011

(56) Documents cités:
- EP-A1- 1 683 681
- EP-A1- 1 820 961
- WO-A2-2004/064222
- DE-C1- 3 936 638
- US-A1- 2002 171 392
- US-A1- 2004 124 703
- US-B1- 6 301 528

## Description

La présente invention concerne un procédé de gestion de l'alimentation en énergie électrique des équipements électriques d'un véhicule automobile par apport dynamique en fonction d'au moins l'état de charge du ou des stockeur(s) de l'énergie électrique par, si nécessaire, délestage sélectif et variable dans le temps, d'au moins une partie des équipements électriques sollicités.

Un tel procédé de gestion est connu, par exemple, de la demande de brevet britannique GB 2 360 644 A.

Actuellement, l'apport de l'énergie électrique dans les véhicules automobiles est géré de différentes manières suivant les constructeurs dont les différentes stratégies conduisent à une mauvaise exploitation du générateur qui ainsi est très rarement utilisé à son potentiel maximun.

Un premier principe consiste à allouer le maximum d'énergie électrique aux fonctions électriques et électroniques du véhicule et sans aucune optimisation de celles-ci.

Une deuxième approche consiste à optimiser la fourniture d'énergie en essayant de réduire au maximum le coût énergétique du véhicule. De ce coût énergétique dépend l'aspect émission des polluants, comme le CO₂, oxyde d'azote, etc. Cette optimisation est réalisée principalement par stockage de l'énergie électrique dans un ou plusieurs stockeur(s), comme la batterie, des capacités, etc., qui ont ensuite pour rôle de restituer cette énergie dans les phases ou le coût énergétique peut entraîner une augmentation des émissions des polluants.

Ce principe de gestion présente un impact direct sur le niveau de performance de certaines fonctions électriques, donc de la satisfaction de l'utilisateur du véhicule.

Il est connu dans l'état de la technique d'appliquer une fonction de délestage. Le but de cette dernière est de couper certaines fonctions électriques énergivores dès lors que le générateur commence à atteindre son potentiel maximum de fourniture en courant. Le nombre de fonctions électriques coupées peut varier en fonction du niveau de finition et de motorisation d'un véhicule.

Lorsque le générateur commence à saturer, la fonction de délestage vient d'abord couper la fonction de confort EE1, puis les fonctions de confort EE2, EE3 et en dernier lieu la fonction de confort EE4. L'ordre dans lequel les fonctions électriques sont progressivement coupées est statique et figé dans le temps.

Une telle gestion énergétique peut être inadaptée aux besoins de l'utilisateur du véhicule qui ne peut plus bénéficier pleinement de certaines fonctions de vie à bord et de confort. En effet, l'ordre de délestage étant figé, les fonctions électriques telle que celle des sièges chauffants risquent d'être activées beaucoup moins souvent que celle de la lunette dégivrante. Ainsi, puisque la fonction "sièges chauffants" est toujours coupée la première, l'utilisateur du véhicule peut croire que cette fonction de son véhicule se trouve défectueuse.

DE3936638 C1 montre un procédé de gestion de l'alimentation en énergie électrique des équipements électriques d'un véhicule automobile. Le procédé de gestion de l'alimentation en énergie électrique selon GB 2 360 644 A cité ci-dessus essaie de remédier à ces inconvénients. Selon cette technique, les priorités concernant la suspension de certains équipements varient dans le temps afin d'éviter qu'un équipement en particulier ne soit pas trop souvent arrêté, évitant ainsi à un utilisateur de penser à une défaillance de l'équipement. Cette activation exceptionnelle d'un équipement d'une priorité inférieure dure seulement le temps d'une temporisation qui est déterminée au préalable. Une fois cette temporisation écoulée, l'équipement retrouve sa priorité (inférieure) initiale.

L'activation de certains équipements reste néanmoins prioritaire au détriment d'autres équipements, ce qui peut se traduire par une gestion énergétique inadaptée aux besoins de l'utilisateur du véhicule.

C'est l'objet de la présente invention de remédier à ces inconvénients décrits ci-dessus et de proposer un procédé de gestion de l'alimentation en énergie électrique des équipements électriques d'un véhicule automobile qui permette d'égaliser les temps d'activation des équipements ou d'allouer à chaque équipement la même quantité d'énergie pour accroître la disponibilité des fonctions de confort et de sécurité, qui conduise à un gain économique sur les générateurs résultant d'une meilleure gestion de l'énergie et qui puisse s' appliquer à tout type de véhicule, hybride ou non.

L'objet de la présente invention est un procédé de gestion de l'alimentation en énergie électrique des équipements électriques d'un véhicule automobile par apport dynamique en fonction d'au moins l'état de charge (SOC) du ou des stockeur(s) de l'énergie électrique par, si nécessaire, délestage sélectif et variable dans le temps d'au moins une partie des équipements électriques sollicités, dans lequel le taux d'activation des équipements électriques est déterminé en établissant un ordre de délestage dynamique, qui évolue en fonction des sollicitations précédentes des différents équipements électriques afin de faire converger les temps d'activation des équipements électriques sollicités vers un même temps et/ou d'allouer à chaque équipement la même quantité d'énergie.

Selon un mode de réalisation préféré, l'apport dynamique de l'énergie électrique au(x) stockeur(s) de l'énergie électrique venant du générateur électrique est prioritaire à celui alloué aux équipements électriques selon l'état de charge et de la température du/de ces premier(s).

Le délestage de l'apport dynamique de l'énergie électrique peut être temporisé.

De préférence, la gestion sera sécurisée en surveillant en temps réel au moins un des paramètres: la tension du ou des stockeur(s), la tension estimée au prochain démarrage/redémarrage, le rapport cyclique d'ouverture du générateur électrique et la température extérieure.

Selon un mode de réalisation préféré, le nombre des équipements, dont l'activation simultanée peut être autorisée est fonction de l'état de charge et/ou de la température du ou des stockeur(s) et/ou de l'état du générateur électrique.

Avantageusement, l'état de charge (SOC) du ou des stockeur(s) est régularisé pour atteindre un seuil ciblé de l'ordre, par exemple, de 85 % de sa (ses) capacité(s) nominale(s).

Selon un mode de réalisation préféré, le taux d'activation des équipements est déterminé en outre par la prise en compte d'une notion d'estimation de l'énergie consommée par cet équipement.

L'apport de l'énergie électrique aux équipements peut être échantillonné en analysant régulièrement l'ordre de délestage calculé ainsi que le nombre des équipements admissibles.

L'invention sera mieux comprise à la lecture de la description détaillée des quelques modes de réalisation pris à titre d'exemple nullement limitatif et illustré par les dessins annexés, sur lesquels:
- Fig. 1: est un diagramme qui montre les composants d'un système de gestion de l'alimentation en énergie électrique des équipements d'un véhicule sur lequel le procédé selon l'invention est appliqué;
- Fig. 2: montre un diagramme pour expliquer comment s'opère l'apport de l'énergie électrique entre le(s) stockeur(s) et les équipements électriques;
- Fig. 3: est un organigramme pour expliquer la détermination du nombre des équipements électriques admissibles en fonction du SOC batterie;
- Fig. 4: est un organigramme pour expliquer l'affectation dynamique de l'ordre de délestage selon l'invention et
- Fig. 5a, b: montrent les résultats de 2 simulations dans le cas d'un délestage statique (Fig. 5a) et d'un délestage dynamique selon l'invention (Fig. 5b).

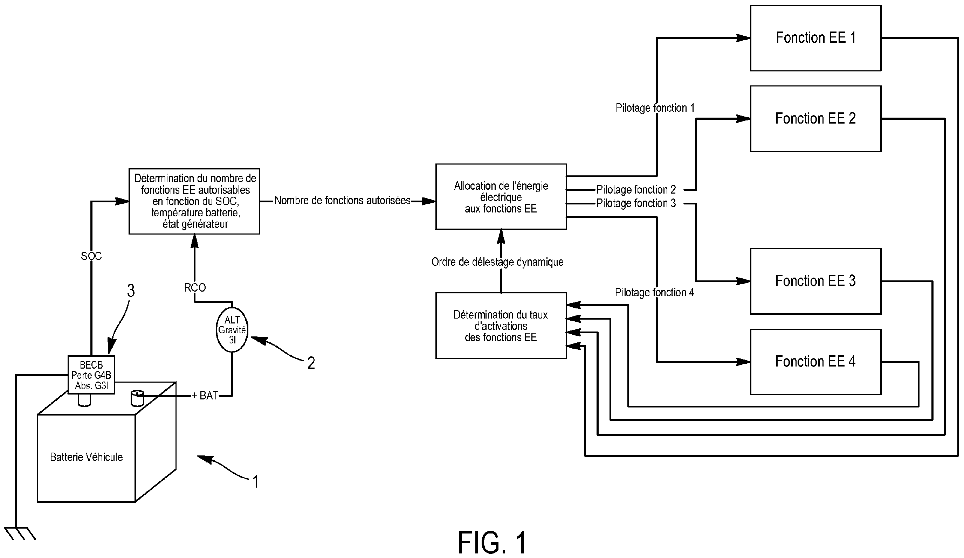

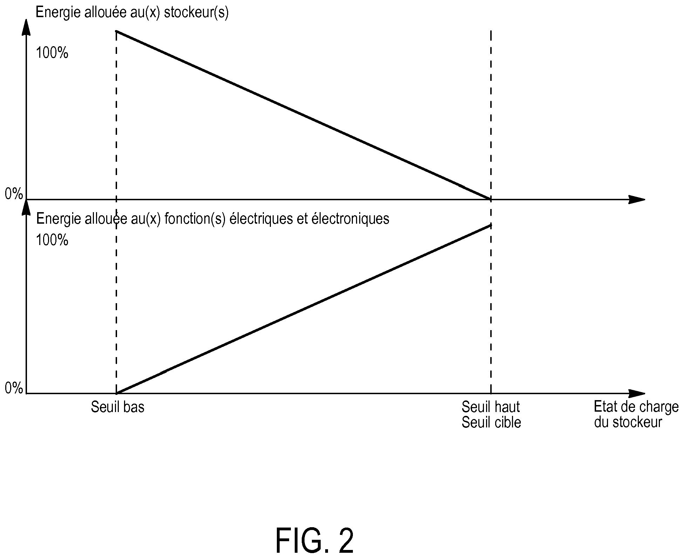

Comme il est présenté Fig. 1, une batterie de véhicule 1 est reliée d'une part à un générateur 2 d'énergie électrique (alternateur) qui charge la batterie d'un côté et de l'autre côté, le générateur 2 alimente les équipements électriques du véhicule. La batterie 1 est reliée d'autre part à un boîtier état de charge batterie (BECB) 3 qui fournit des informations sur l'état de charge (SOC, state of charge,) et de la température de la batterie à un étage de détermination du nombre des équipements EE admissibles en fonction du SOC, de la température batterie et de l'état du générateur (RCO). L'apport de l'énergie électrique entre la batterie 1 (ou plus généralement entre le ou les stockeur(s) d'énergie électrique) et les équipements électriques est déterminé. Fig. 2 montre le principe de cet apport d'énergie électrique.

Le principe consiste à gérer l'apport de l'énergie électrique issu du générateur 2 en fonction de l'état de charge et de la température de la batterie 1. Plus l'état de charge de la batterie est bas (par rapport à un seuil bas prédéfini), plus l'énergie allouée à la batterie sera favorisée au détriment de certains équipements électriques (inhibition partielle ou totale des équipements EE1, ... EE4). Plus l'état de charge de la batterie est haut (par rapport à un seuil haut prédéfini), plus l'énergie allouée aux équipements électriques sera favorisée (activation partielle ou totale des équipements EE1, ... EE4).

Il convient également de sécuriser ce type de gestion en surveillant en temps réel d'autres grandeurs physiques, comme la tension de la batterie 1, la tension estimée au prochain démarrage/redémarrage, le rapport cyclique d'ouverture du générateur électrique, la température extérieure, etc. Cette sécurisation permettra d'allouer l'énergie électrique en priorité à la batterie 1 (ou plus généralement au ou aux stockeur(s) de l'énergie électrique).

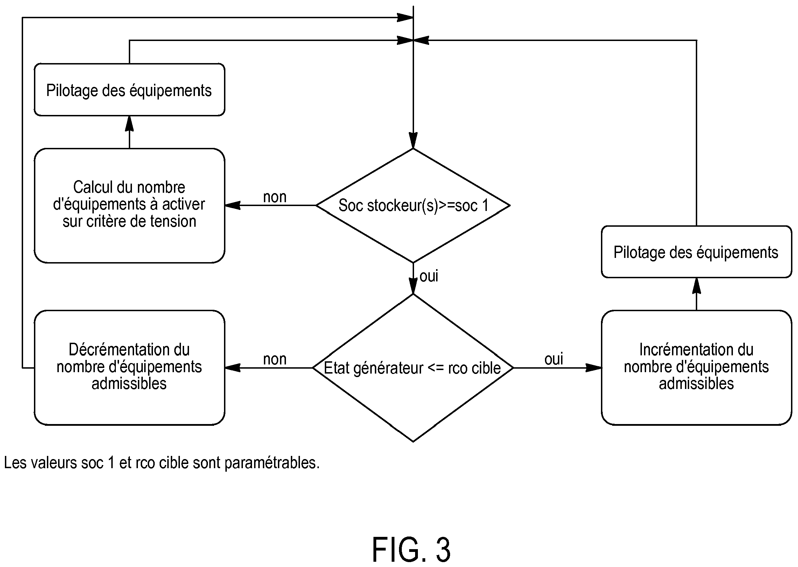

La détermination du nombre des équipements électriques utilisables en fonction du SOC batterie sera mieux comprise en se référant à Fig. 3 qui montre une telle détermination du nombre des équipements admissibles.

Comme on peut le voir sur l'organigramme présenté Fig. 3, le nombre des équipements admissibles dépend de l'état de charge (SOC) et/ou de la température de la batterie et/ou de l'état du générateur (RCO). Les valeurs des seuils SOC 1 et RCO ciblés sont paramétrables. Selon le niveau des valeurs SOC batterie et RCO générateur, le nombre des équipements admissibles est incrémenté ou décrémenté.

Selon une stratégie appliquée chez un constructeur automobile, il est envisagé de faire converger l'état de charge du ou des stockeur(s) d'énergie électrique pour atteindre un seuil ciblé, par exemple de l'ordre de 85% de sa capacité nominale. La valeur du seuil peut être paramétrée en fonction du modèle du véhicule. La présente invention viendra en complément de cette stratégie de régulation de SOC et permettra ainsi de piloter directement les équipements électriques en fonction de l'état de charge du ou des stockeur(s) d'énergie électrique. Si l'état de charge (SOC) de la batterie est inférieur à un seuil SOC 1, alors le nombre des équipements à autoriser sera calculé à partir de la tension de la batterie, sinon le nombre des équipements admissibles sera calculé en fonction de l'état du générateur électrique.

A l'étape suivante, une fonction permettant l'apport de l'énergie électrique aux équipements électriques intervient alors pour piloter les équipements électriques. Cette fonction reçoit le flux d'informations sur le nombre des équipements admissibles et l'ordre de délestage dynamique. Elle fournit alors le flux de pilotage de l'équipement EE1, ... équipement EEx.

Pour éviter d'avoir des commutations intempestives, il est utile d'intégrer dans cette fonction une fréquence d'échantillonage T qui peut également être dynamique et évoluer dans le temps afin de trouver le meilleur compromis entre la durée de vie des relais et l'optimisation de l'énergie. Ainsi, à chaque séquence T, la fonction reçoit l'ordre de délestage calculé par la fonction permettant la détermination du taux d'activation des équipements électriques ainsi que le nombre des équipements admissibles et vient piloter en conséquence les équipements électriques.

S'il y a par exemple 5 équipements à alimenter en énergie électrique et si le nombre des équipements admissibles est de 3, alors les équipements EE1, EE2 s'ils ont bénéficié d'un temps d'activation supérieur à celui des autres fonctions, seront coupés et les équipements électriques EE3 ... EE5 seront activés.

La fonction permettant la détermination du taux d'activation des équipements électriques a pour but de mesurer, en temps réél, le temps total pendant lequel chaque équipement électrique a été activé depuis le démarrage du véhicule. Il est également possible d'ajouter une notion d'estimation de l'énergie consommée par chaque équipement. Elle fournit alors un ordre de délestage dynamique qui évolue en fonction des sollicitations des différents équipements électriques.

Au début de chaque démarrage véhicule, puisque tous les équipements électriques n'ont pas encore été activés, il est nécessaire d'initialiser l'ordre de délestage.

Puis, la fonction se met à compter le temps de sollicitation de chacun des équipements électriques et/ou l'énergie consommée par chaque équipement électrique et on verra apparaître en temps réel un nouveau tableau de l'ordre de délestage dynamique, trié par ordre décroissant.

La fonction permet donc d'identifier en temps réél les équipements électriques qui auront été le plus souvent délestés. Ces derniers deviendront donc prioritaires dans l'ordre de délestage et seront activés dès que possible avant tous les autres équipements électriques.

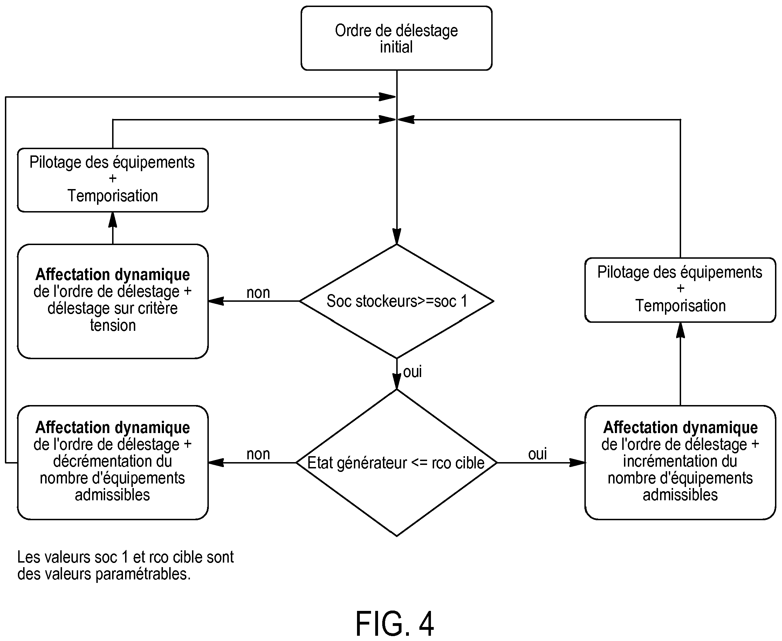

Ce dernier procédé est illustré en Fig. 4, qui présente le cas où on commence avec un ordre de délestage initial (au début du démarrage du véhicule). Cet ordre de délestage initial est affecté par le tri dynamique effectué selon l'ordre de temps de sollicitation de chaque équipement.

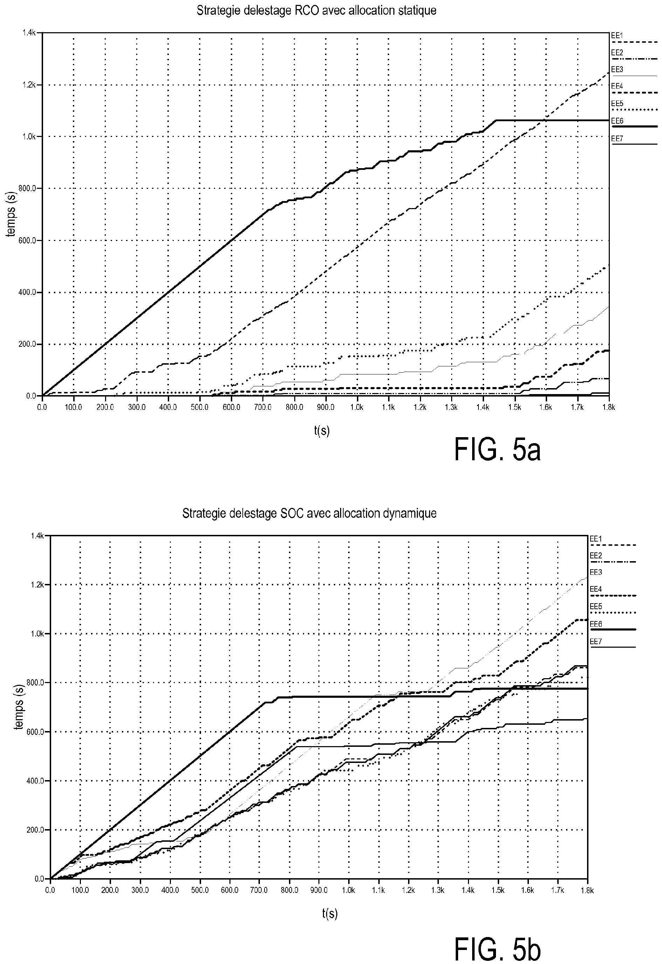

Fig. 5 montre des courbes représentant le temps d'activation de chacun des équipements électriques. Il y a dans chaque cas 7 équipements électriques dont l'alimentation en énergie électrique doit être gérée.

Fig. 5a montre une courbe représentant un délestage sur l'état de charge du générateur ayant reçu l'ordre de délestage statique. On voit bien que certains équipements sont priviligiés au détriment d'autres équipements. Ceci par exemple peut donner à l'utilisateur l'idée que quelques-uns des équipements électriques, comme par exemple les équipements EE1 sont défectueux, car après l'actionnement du bouton de l'équipement EE1 il ne se passe rien car selon l'état de charge de la batterie cette fonction a été éventuellement coupée de préférence.

Fig. 5b montre le cas d'un délestage sur l'état de charge (SOC) de la batterie et l'état de charge du générateur ayant reçu l'ordre de délestage dynamique selon l'invention.

Comme on peut le voir sur ces courbes, le délestage selon le critère SOC associé à un ordre de délestage dynamique permet d'obtenir des taux d'activation plus importants et plus équilibrés entre les équipements. Ainsi, des équipements qui n'étaient quasiment jamais activés selon le cas représenté en Fig. 5a bénéficient davantage du temps et/ou de l'énergie grâce à la solution selon la présente invention.

Il y a donc un accroissement de la disponibilité des équipements électriques pour assurer par exemple le confort thermique habitacle, le dégivrage arrière, les sièges chauffants ... etc.

## Revendications

1. Procédé de gestion de l'alimentation en énergie électrique des équipements électriques (EE1, ... EE4) d'un véhicule automobile par apport dynamique en fonction d'au moins un état de charge (SOC) du ou des stockeurs (1) de l'énergie électrique provenant d'un générateur électrique (2) par, si nécessaire, délestage sélectif et variable dans le temps d'au moins une partie des équipements électriques (EE1, ... EE4) sollicités, **caractérisé en ce qu'**il comprend la détermination d'un taux d'activation des équipements, permettant de mesurer le temps de sollicitation de chacun des équipements électriques et/ou l'énergie consommée par chaque équipement électrique, et la détermination d'un ordre de délestage dans lequel les équipements sont triés par ordre de taux d'activation décroissant de sorte que les équipements le plus souvent délestés soient activés de façon prioritaire et **en ce que** l'apport dynamique de l'énergie électrique au ou aux stockeurs (1) de l'énergie électrique venant du générateur électrique (2) est prioritaire à celui alloué aux équipements électriques (EE1, ... EE4) selon l'état de charge et d'une température du ou de ces stockeurs.

2. Procédé de gestion selon la revendication 1, **caractérisé en ce que** le délestage de l'apport dynamique de l'énergie électrique peut être temporisé.

3. Procédé de gestion selon une quelconque des revendications précédentes, **caractérisé en ce que** la gestion est sécurisée en surveillant en temps réel au moins un des paramètres: une tension du ou des stockeur(s) (1), une tension estimée au prochain démarrage ou redémarrage, un rapport cyclique d'ouverture du générateur électrique (2) et une température extérieure.

4. Procédé de gestion selon une quelconque des revendications précédentes, **caractérisé en ce que** le nombre des équipements (EE1, ... EE4) dont l'activation simultanée peut être autorisée est fonction de l'état de charge et de la température du ou des stockeurs (1) et de l'état du générateur (2).

5. Procédé de gestion selon la revendication 1, **caractérisé en ce que** l'état de charge (SOC) du ou des stockeurs (1) est régularisé pour atteindre un seuil ciblé de l'ordre par exemple de 85 % de sa ou ses capacités nominales.

6. Procédé de gestion selon l'une quelconque des revendications précédentes, **caractérisé en ce que** l'apport de l'énergie électrique aux équipements (EE1, ...EE4) est étalonnée en analysant régulièrement l'ordre de délestage calculé ainsi que un nombre des équipements admissibles, le nombre des équipements admissibles étant le nombre des équipements (E1...E4) dont l'activation simultanée peut être autorisée en fonction de l'état de charge et de la température du ou des stockeurs et d'un état du générateur.

## Patentansprüche

1. Verfahren zur Verwaltung der Stromversorgung einer elektrischen Vorrichtung (EE1, ... EE4) eines Kraftfahrzeugs durch dynamische Zufuhr in Abhängigkeit von mindestens einem Ladezustand (SOC) des oder der Speicher (1) des Stroms, der von einem Stromgenerator (2) kommt, durch, bei Bedarf, selektives und zeitlich variables Abwerfen mindestens eines Teils der beanspruchten elektrischen Vorrichtungen (EE1, ... EE4), **dadurch gekennzeichnet, dass** es das Bestimmen einer Aktivierungsrate der Vorrichtungen umfasst, das es erlaubt, die Beanspruchungszeit jeder der elektrischen Vorrichtungen und/oder den Strom, der von jeder elektrischen Vorrichtung verbraucht wird, zu messen, und das Bestimmen einer Abwurfreihenfolge, in der die Vorrichtungen in der Reihenfolge abnehmender Aktivierungsrate derart geordnet werden, dass die am häufigsten abgeworfenen Vorrichtungen vorrangig aktiviert werden, und dass die dynamische Stromzufuhr zu dem oder den Speichern (1) des Stroms, der von dem Stromgenerator (2) kommt, vor der vorrangig ist, die den elektrischen Vorrichtungen (EE1, ... EE4) gemäß dem Ladezustand und einer Temperatur des oder der Speicher zugeordnet wird.

2. Verwaltungsverfahren nach Anspruch 1, **dadurch gekennzeichnet, dass** das Abwerfen der dynamischen Stromzufuhr verzögert werden kann.

3. Verwaltungsverfahren nach einem der vorstehenden Ansprüche, **dadurch gekennzeichnet, dass** die Verwaltung abgesichert wird, indem in Echtzeit mindestens einer der folgenden Parameter überwacht wird: eine Spannung des oder der Speicher (1), eine geschätzte Spannung beim nächsten Anlassen oder Wiederanlassen, ein zyklisches Öffnungsverhältnis des Stromgenerators (2) und eine Außentemperatur.

4. Verwaltungsverfahren nach einem der vorstehenden Ansprüche, **dadurch gekennzeichnet, dass** die Anzahl der Vorrichtungen (EE1, ... EE4), deren gleichzeitige Aktivierung gestattet werden kann, von dem Ladezustand und der Temperatur des oder der Speicher (1) und dem Zustand des Generators (2) abhängt.

5. Verwaltungsverfahren nach Anspruch 1, **dadurch gekennzeichnet, dass** der Ladezustand (SOC) des oder der Speicher (1) geregelt wird, um einen Filterschwellenwert in der Größenordnung von zum Beispiel 85 % seiner Nennkapazität(en) zu erreichen.

6. Verwaltungsverfahren nach einem der vorstehenden Ansprüche, **dadurch gekennzeichnet, dass** die Stromzufuhr zu den Vorrichtungen (EE1, ... EE4) gestaffelt wird, indem regelmäßig die berechnete Abwurfreihenfolge sowie eine Anzahl zulässiger Vorrichtungen berechnet wird, wobei die Anzahl der zulässigen Vorrichtungen die Anzahl der Vorrichtungen (E1, ... E4) ist, deren gleichzeitige Aktivierung in Abhängigkeit von dem Ladezustand und der Temperatur des oder der Speicher und einem Zustand des Generators gestattet werden kann.

## Claims

1. A method for managing the supply of electrical power to the electrical equipment (EE1, ... EE4) of a motor vehicle by means of dynamic supply as a function of at least one state of charge (SOC) of the unit(s) (1) for storing electrical power originating from an electric generator (2) by means of, if necessary, selectively and variably in time, shedding the loads of at least a portion of the biased electrical equipment (EE1, ... EE4), **characterized in that** it includes the determining of an activation rate of the equipment, permitting the measuring of the biasing time of each of the items of electrical equipment and/or the power consumed by each item of electrical equipment, and the determining of a load-shedding order in which the equipment are sorted by descending order of rate of activation, so that the equipment of which the loads are most often shed are activated as a priority and **in that** the dynamic supply of the electrical power to the unit(s) (1) for storing electrical power originating from the electric generator (2) has priority with respect to that allocated to the electrical equipment (EE1, ... EE4) according to the state of charge and of a temperature of the or of these storing units.

2. The method for management according to Claim 1, **characterized in that** the load-shedding of the dynamic supply of electrical power can be timed.

3. The method for management according to any one of the preceding claims, **characterized in that** the management is secured by monitoring in real time at least one of the parameters: a voltage of the storing unit(s) (1), an estimated voltage at the next starting or restarting, a cyclic ratio of opening of the electric generator (2) and an exterior temperature.

4. The method for management according to any one of the preceding claims, **characterized in that** the number of items of equipment (EE1, ... EE4), the simultaneous activation of which can be authorised is a function of the state of charge and of the temperature of the storing unit(s) (1) and of the status of the generator (2) .

5. The method for management according to Claim 1, **characterized in that** the state of charge (SOC) of the storing unit(s) (1) is regularized to reach a targeted threshold in the order for example of 85 % of its nominal capacity or capacities.

6. The method for management according to any one of the preceding claims, **characterized in that** the supply of the electrical power to the equipment (EE1, ... EE4) is calibrated by regularly analysing the calculated order of load shedding and an admissible number of items of equipment, the number of admissible items of equipment being the number of items of equipment (E1...E4), the simultaneous activation of which can be authorized as a function of the state of charge and of the temperature of the storing unit(s) and of a status of the generator.
